# EUROPEAN PATENT APPLICATION

(11) **EP 4 567 462 A1**
(43) Date of publication of application: **11.06.2025**
(21) Application number: 24216709.6
(22) Date of filing: 02.12.2024
(51) Int. Cl.: G01S 7/484, G01S 7/497, G01S 17/87, G01S 17/931, G01S 17/933

(54) **NON-INTERFERING COHERENT LIDAR SYSTEM**

(30) Priority: 04.12.2023 US 202318528432
(71) Applicant: The Boeing Company, Arlington, VA 22202 (US)
(72) Inventor: HILLER, Nathan D., ARLINGTON, 22202 (US); DOWGWILLO, Robert Michael, ARLINGTON, 22202 (US)
(74) Representative: Plasseraud IP

(57) **Abstract**

A vehicle lidar network comprising vehicles and lidar systems in the vehicles. The lidar systems are configured to emit laser beams having a number of electromagnetic properties in which the number of electromagnetic properties is selected to reduce interference caused by the laser beams emitted from other lidar systems.

## Description

### BACKGROUND INFORMATION

### 1. Field:

The present disclosure relates generally to lidar systems and in particular to operating vehicles using lidar systems without interference from other lidar systems.

### 2. Background:

Light detection and ranging (lidar) systems are laser-based sensor systems that can be used in aircraft as sensor systems. Lidar systems can be used to replace currently-used sensors and add new capabilities for future aircraft. Many currently-used sensors protrude from the skin of the aircraft, making these sensors susceptible to environmental conditions. These conditions include ice, insects, birds, and other conditions that can damage or reduce the effectiveness of these currently-used sensors.

Lidar systems can be used in aircraft to measure parameters for the current state of the aircraft. These parameters include, for example, true airspeed, angle-of-sideslip, angle-of-attack, outside air temperature and pressure, and cloud density. Further, lidar systems can also be used to predict the future state of parameters for the aircraft. For example, clear air turbulence that is miles ahead of the aircraft can be detected using a lidar system.

Lidar systems generate sensor data by emitting a laser beam into the atmosphere and by detecting backscatter caused by the laser beam encountering particles in the atmosphere. The particles can be air molecules, aerosols, or both. The aerosols can be comprised of dust, ice crystals, water droplets, or other small particles. The sensor data can also be generated from the laser beam encountering an object such as a vehicle, a bird, or other object.

### SUMMARY

An embodiment of the present disclosure provides a vehicle lidar network comprising vehicles and lidar systems in the vehicles. The lidar systems are configured to emit laser beams having a number of electromagnetic properties in which the number of electromagnetic properties is selected to reduce interference caused by other laser beams emitted from other lidar systems.

Another embodiment of the present disclosure provides a platform lidar network comprising platforms; and lidar systems in the platforms. The lidar systems are configured to emit laser beams having a number of electromagnetic properties in which the number of electromagnetic properties is selected to reduce interference caused by other laser beams emitted from other lidar systems.

Yet another embodiment of the present disclosure provides a vehicle sensor network comprises vehicles and electromagnetic sensor systems in the vehicles. The electromagnetic sensor systems are configured to emit electromagnetic waves having a number of electromagnetic properties in which the number of electromagnetic properties is selected to reduce interference caused by other electromagnetic waves emitted from other electromagnetic sensor systems.

Still another embodiment of the present disclosure provides a method of operating a vehicle lidar network. Vehicles are identified in a region. A number of electromagnetic properties is determined for laser beams emitted by lidar systems in the vehicles. The number of electromagnetic properties for the lidar system is changed to reduce the interference from the other lidar systems.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a pictorial representation of a network of data processing systems in which illustrative embodiments may be implemented;
**Figure 2** is an illustration of a block diagram of a lidar environment in accordance with an illustrative embodiment;
**Figure 3** is an illustration of a block diagram of a vehicle sensor network in accordance with an illustrative embodiment;
**Figure 4** is an illustration of aircraft with lidar systems in points with an illustrative embodiment;
**Figures 5A** and **5B** are illustrations of channels for laser beam wavelength in accordance with an illustrative item;
**Figure 6** is an illustration of a flowchart of a process for operating a lidar network in accordance with an illustrative embodiment;
**Figure 7** is an illustration of a flowchart of a process for operating a lidar network in accordance with an illustrative embodiment;
**Figure 8** is an illustration of a flowchart of a process for operating a vehicle lidar network in accordance with an illustrative embodiment;
**Figure 9** is an illustration of a flowchart of a process for selecting electromagnetic properties in accordance with an illustrative embodiment;
**Figure 10** is an illustration of a flowchart of a process for changing a laser beam orientation in accordance with an illustrative embodiment;
**Figure 11** is an illustration of a flowchart of a process for changing a number of electromagnetic properties in accordance with an illustrative embodiment;
**Figure 12** is an illustration of a flowchart of a process for changing a number of electromagnetic properties in accordance with an illustrative embodiment;
**Figure 13** is an illustration of a flowchart of a process for changing a number of electromagnetic properties in accordance with an illustrative embodiment;
**Figure 14** is an illustration of a flowchart of a process for changing a number of electromagnetic properties in accordance with an illustrative embodiment;
**Figure 15** is an illustration of a flowchart of a process for changing a number of electromagnetic properties in accordance with an illustrative embodiment;
**Figure 16** is an illustration of a block diagram of a data processing system in accordance with an illustrative embodiment;
**Figure 17** is an illustration of a block diagram of an aircraft manufacturing and service method in accordance with an illustrative embodiment; and
**Figure 18** is an illustration of a block diagram of an aircraft in which an illustrative embodiment may be implemented.

### DETAILED DESCRIPTION

The illustrative embodiments recognize and take into account one or more different considerations as described herein. For example, a laser beam emitted from a lidar system for a first aircraft hits the lidar system for another aircraft. The emitted laser beam from the first aircraft has a much greater intensity than backscatter detected from the laser beam of the other aircraft. The emitted laser beam has a much greater intensity than backscatter light even after traveling hundreds of kilometers. Further, the emitted laser beam can also widen or expand, increasing the chance that the laser beam is detected by the lidar system of the other aircraft. This situation can cause the generation of erroneous sensor data. In essence, the emitted laser beam can blind the lidar system in another aircraft.

In the illustrative examples, this issue can be reduced by having the different lidar systems in different aircraft use wavelengths that are unique to those aircraft. For example, a fleet of aircraft or a plurality of aircraft operating in a particular region can have lidar systems that are selected such that duplication of wavelengths is absent or very low.

For example, with 100 aircraft where each has a lidar system, 100 different wavelengths would avoid the issue of erroneous sensor data being caused by interference from other lidar systems. If two or three of the 100 aircraft use the same wavelength, then the chances of generating erroneous sensor data is much less as compared to all 100 aircraft using the same wavelength in their lidar systems.

Thus, the illustrative embodiments provide a method, apparatus, system, and computer program product for operating a lidar network, such as a vehicle lidar network. In one illustrative example, a vehicle lidar network comprises vehicles and lidar systems in the vehicles. The lidar systems are configured to emit laser beams having a number of electromagnetic properties in which the number of electromagnetic properties is selected to reduce interference caused by the laser beams emitted from other lidar systems in detecting backscatter light.

In one illustrative example, the vehicle lidar system can be preconfigured prior to operation of the vehicle. In another illustrative example, the vehicle lidar network can be dynamically configured during operation of the vehicles.

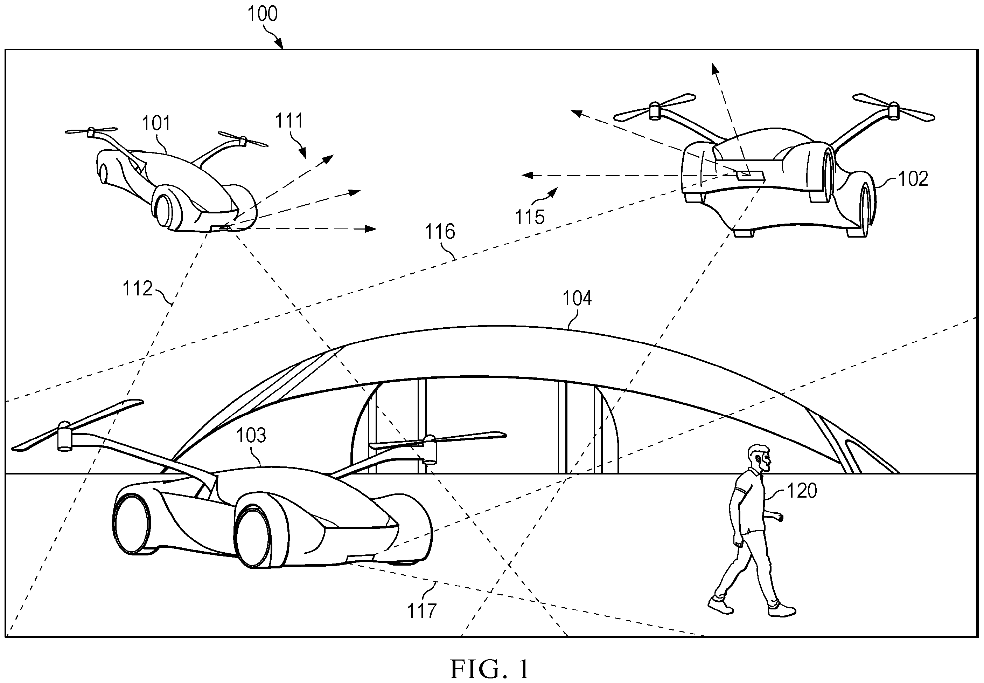

With reference now to the figures, and in particular, with reference to **Figure 1****,** a pictorial representation of a network of data processing systems is depicted in which illustrative embodiments may be implemented. Vehicle lidar network **100** comprises vehicles with lidar systems. As depicted in this example, vehicle lidar network **100** comprises air-land vehicles in the form of flying car **101,** flying car **102,** and flying car **103.** These flying cars are located at vertiport **104.** In this example, flying car **101,** flying car **102,** and flying car **103** can operate both on the ground and in the air. As depicted in this example, flying car **103** is operating on the ground. Flying car **101** and flying car **102** are flying in the air.

The operations of these flying cars are facilitated using sensor systems such as lidar systems located in these flying cars. In this illustrative example, the lidar systems in the flying cars are used in operating these flying vehicles.

The lidar systems can be used to generate sensor data. The sensor data can include optical air data and object data. In this example, optical air data includes a number of parameters such as air speed, density, temperature, and clear air turbulence. Object data is data that can be used for object detection. This sensor data can be used to determine various parameters such as speed, the presence of objects, and other information.

As used herein, "a number of," when used with reference to items means one or more items. For example, "a number of parameters" is one or more parameters.

In this illustrative example, lidar systems in the air vehicles can be configured to use different wavelengths. The use of a different wavelength for a lidar system in a flying car from the wavelengths for other lidar systems in other flying cars can avoid at least one of interference or the generation of erroneous data.

For example, flying car **101** emits narrow laser beams **111** in the direction of flying car **102.** If both flying car **101** and flying car **102** have lidar systems that use the same wavelength, the lidar system of flying car **102** can detect one or more narrow laser beams **111,** in addition to backscatter light generated from emitting narrow laser beams **115.** As a result, erroneous optical air data can be generated. For example, flying car **102** can generate an erroneous air speed using light detected from one or more of narrow laser beams **111.**

In the illustrative example, the lidar systems in flying car **101,** flying car **102,** and flying car **103** can use different wavelengths in the generation of optical air data or object data resulting from detecting light from laser beams emitted from other flying cars.

In this illustrative example, the lidar systems in the flying cars can be reconfigured to have selected wavelengths for the laser beams. In other illustrative examples, one or more of the wavelengths of laser beams emitted from the lidar systems in the flying cars in this example can be changed during operation of the flying cars to avoid interference in generating optical air data and object data.

In this depicted example, narrow laser beams are used to generate optical air data. Broad laser beams are used to generate object data. The difference between a narrow laser beam and a broad laser beam is based on the breadth of the beam. The selection of the breadth is based on the type of data that is desired to be generated. For example, a narrow laser beam is narrower in breadth than a broad laser beam.

The selection of the breadth for a laser beam in these examples is based on the type of sensor data that is desired. The breadth of a narrow laser beam is selected such that optical air data can be generated from backscatter light detected in response to the laser beam. The breadth of a broad laser beam is selected to generate object data that enables detecting objects within an area or field of view (FOV). A greater breadth increases the ability to detect the presence of an object.

In this illustrative example, flying car **101** emits narrow laser beams **111** that results in backscatter light from backscattering of narrow laser beams **111.** This backscatter light is detected and used to generate optical air data. In this example, flying car **101** also emits broad laser beam **112** to generate object data.

Broad laser beam **112** results in backscatter light that is detected and used to generate object data. In this example, the backscatter light is generated in response to broad laser beam **112** scattering of flying car **103.** This object data is used to detect the presence of flying car **103.**

Flying car **102** emits narrow laser beams **115** and broad laser beam **116.** Backscatter light detected in response to narrow laser beams **115** is used to generate optical air data. Object data generated in response to backscatter light detected from broad laser beam **116** is used to detect the presence of flying car **103.** In this depicted example, flying car **103** emits broad laser beam **117.** The backscatter light detected in response to broad laser beam **117** is used to generate object data. In this case, the object data indicates the presence of person **120.**

**Figure 1** is intended as an example and not as an architectural limitation for the different illustrative embodiments. For example, other types of vehicles using lidar systems in the present. Aircraft, ground vehicles, and other types of vehicles can also be present in vehicle lidar network **100.** Further, the illustrative example only depicts three flying cars. As the number of flying cars or other vehicles increases, the potential for interference increases.

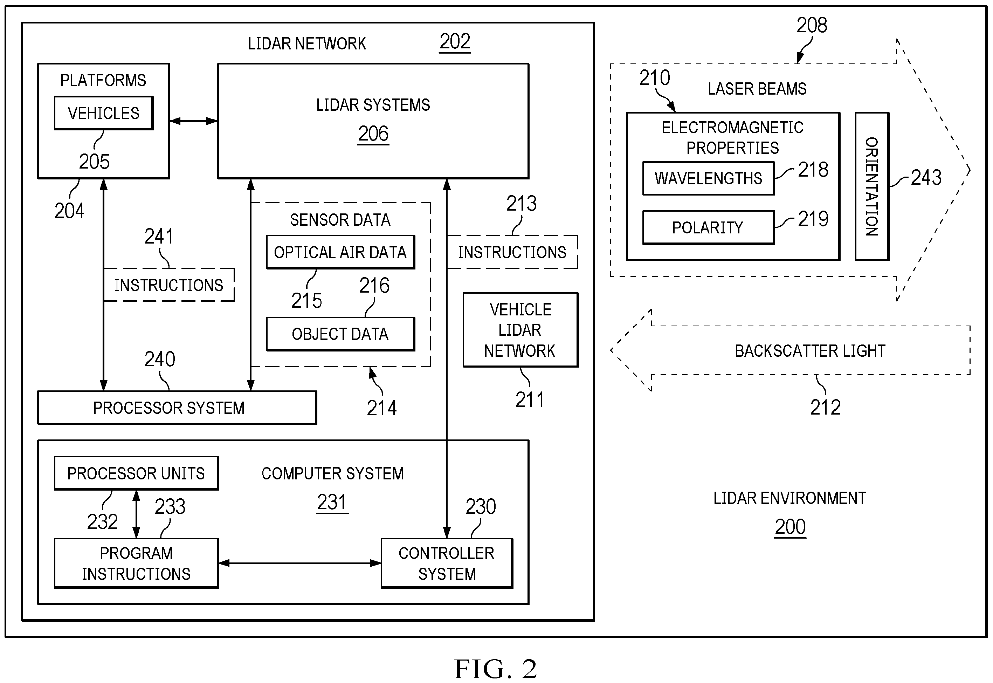

With reference now to **Figure 2****,** an illustration of a block diagram of a lidar environment is depicted in accordance with an illustrative embodiment. Lidar environment **200** is an environment in which lidar network **202** comprises platforms **204** and lidar systems **206.** Lidar systems **206** are located in platforms **204.** In this illustrative example, each of these platforms has a lidar system. In some illustrative examples, a platform can have more than one lidar system.

Platforms **204** can take a number of different forms. For example, platforms **204** can be selected from at least one of a mobile platform, a stationary platform, a land-based structure, an aquatic-based structure, a space-based structure, an aircraft, a commercial airplane, a rotorcraft, a tilt-rotor aircraft, a tilt wing aircraft, a vertical takeoff and landing aircraft, an electrical vertical takeoff and landing vehicle a personal air vehicle, an air-land vehicle, an autonomous vehicle, an autonomous ground vehicle, an autonomous air vehicle, an autonomous air and ground vehicle, an unmanned aerial vehicle, an unmanned quadcopter, a surface ship, a tank, a personnel carrier, a train, a spacecraft, a space station, a satellite, an automobile, a building, a traffic control tower, an airport, a rocket, or other types of platforms.

The phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C," may include item A, item A and item B, or item B. This example also may include item A, item B, and item C, or item B and item C. Of course, any combination of these items can be present. In some illustrative examples, "at least one of" can be, for example, without limitation, two of item A; one of item B; and ten of item C; four of item B and seven of item C; or other suitable combinations.

In one illustrative example, platforms **204** can be vehicles **205.** With this example, lidar network **202** is vehicle lidar network **211.** Vehicles **205** can be selected from at least one of an aircraft, a commercial airplane, a rotorcraft, a tilt-rotor aircraft, a tilt wing aircraft, a vertical takeoff and landing aircraft, an electrical vertical takeoff and landing vehicle, a personal air vehicle, an air-land vehicle, an autonomous vehicle, an autonomous air-land vehicle, a surface ship, a tank, a personnel carrier, a train, a spacecraft, or other suitable vehicles.

In this example, vehicles **205** operate within a region. This region can be, for example, a city, a state, a predefined airspace, or some other suitable region.

As depicted, lidar systems **206** are configured to emit laser beams **208.** Backscatter light **212** is generated in response to scattering of laser beams **208.** This backscatter light is detected by lidar systems **206** to generate sensor data **214** using backscatter light **212.** Sensor data **214** can include at least one of optical air data **215** or object data **216.**

In this illustrative example, optical air data **215** can include a number of parameters selected from at least one of an airspeed, an angle-of-sideslip, an angle-of-attack, a cloud density, an air density, a temperature, a pressure, a clear air turbulence, or other parameters. Object data **216** is data that can be used for object detection.

In these examples, a lidar system can be implemented using any currently available lidar system.

A lidar (light detection and ranging) system includes a number of different components. For example, a lidar system can include a laser source, a receiver, and a controller.

The laser source can emit one or more laser beams. These laser beams can be scattered by air molecules, aerosols, or both. The laser beams can also be scattered or reflected. The scattering and reflection of laser beams can be detected by the receiver. The receiver can be implemented using one or more photodetectors. The photodetectors convert the backscatter into electrical signals. The electrical signals can be processed by a controller that generates the sensor data. In some illustrative examples, electrical signals are the sensor data.

As depicted, sensor data **214** is generated by lidar systems **206** in vehicles **205** from detecting backscatter light **212.** Sensor data **214** can be sent to processor system **240** and processed by processor system **240** located in a portion of vehicles **205** or in a remote location. The portion of vehicles **205** is selected from some or all of vehicles **205.**

In this example, processor system **240** can be implemented using a data processing system located in computer system **231** or in some other location. Vehicles **205** can execute instructions **241** received from processor system **240.** Instructions **241** can include at least one of a change in speed, a change in direction, a new waypoint, a change in altitude, or instructions for the operation of vehicle **205.** These instructions can include at least one of the suggested changes, commands, data, or other information that can be used operate vehicle **205.** In these illustrative examples, instructions **241** may be implemented by an operator of a vehicle when the vehicle is a manned vehicle. In another example, instructions **241** can be implemented by a controller or computer operating the vehicle when the vehicle is an autonomous vehicle but does not require a human operator to operate the vehicle.

In this illustrative example, lidar systems **206** are configured to emit laser beams **208** having a number of electromagnetic properties **210.** In this example, the number of electromagnetic properties **210** is selected to reduce interference caused by other laser beams emitted from other lidar systems. In one illustrative example, the other lidar systems can be lidar systems in lidar systems **206** in vehicle lidar network **211.** In another illustrative example, the other lidar systems can be in other networks or for other vehicles or platforms not part of vehicle lidar network **211.**

In this illustrative example, lidar systems **206** emit one or more of laser beams **208** with a number of electromagnetic properties **210** that reduce interference when detecting backscatter. This interference can be reduced even in the presence of other laser beams emitted by other lidar systems.

The number of electromagnetic properties can be selected from at least one of a number of wavelengths **218** or polarity **219.** In this example, polarity **219** is the polarity of the light in a laser beam. Here, polarity is used to describe the polarization state of the laser beam, such as linearly polarized or circularly polarized. The different laser beams 208 can use different polarization states to reduce the interference caused from other laser beams. For example, some laser beams can employ a first linear polarization state and others can employ a second linear polarization state that is orthogonal to the first linear polarization state. Further, states that are not orthogonal can also be used, for example some laser beams can employ a first linear polarization state and others can employ a second linear polarization state that has a polarization oriented at some angle to the polarization of the first linear polarization state. Equally, some laser beams can employ a first circular polarization state, such as right-handed circular polarization, while other beams can employ left-handed circular polarization. Moreover, some beams can employ any circular polarization while other beams can employ any linear polarization. Further, elliptical polarization states can also be employed in the same manner as linear and circular polarization states to differentiate between beams.

In one illustrative example, the number of electromagnetic properties **210** can be reconfigured in lidar systems **206.** In another illustrative example, the number of electromagnetic properties **210** can be dynamically changed during operation of lidar systems **206.** In other words, one or more electromagnetic properties **210** can be changed in one or more lidar systems **206** for vehicle **205** during the operation of vehicle **205 .** For example, these changes can be made while vehicle **205** are moving or otherwise operating. As a result, some or all of lidar systems **206** may have a change in one or more of the number of electromagnetic properties **210** in which the changes made to reduce interference in the operation of lidar systems **206** in vehicle lidar network **211.**

In one illustrative example, lidar network **202** includes controller system **230.** In this illustrative example, controller system **230** can be distributed in one or more data processing systems, for example, wherein controller system **230** is selected from one of a distributed controller system located in the vehicles and a centralized controller system in a location. Controller system **230** can be located in some or all of vehicles **205.** When centralized in a location, the location can be in a vehicle, a control center, a traffic control tower, or other location.

In this illustrative example, controller system **230** includes a number of components that can be implemented in hardware. Controller system **230** can be implemented in software, hardware, firmware or a combination thereof. When software is used, the operations performed by controller system **230** can be implemented in program instructions **233** configured to run on hardware, such as a number of processor units **232.** When firmware is used, the operations performed by controller system **230** can be implemented in program instructions **233** and data and stored in persistent memory to run on a processor unit. When hardware is employed, the hardware can include circuits that operate to perform the operations in controller system **230.**

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **231** is a physical hardware system and includes one or more data processing systems. When more than one data processing system is present in computer system **231,** those data processing systems are in communication with each other using a communications medium. The data processing systems can be present within one or more of platforms **204.** The communications medium can be a network. The data processing systems can be selected from at least one of a computer, a vehicle computer, controller, a platform computer, a server computer, a tablet computer, or some other suitable data processing system.

As depicted, computer system **231** includes a number of processor units **232** that are capable of executing program instructions **233** implementing processes in the illustrative examples. In other words, program instructions **233** are computer-readable program instructions.

As used herein, a processor unit in the number of processor units **232** is a hardware device and is comprised of hardware circuits such as those on an integrated circuit that respond to and process instructions and program code that operate a computer. When the number of processor units **232** executes program instructions **233** for a process, the number of processor units **232** can be one or more processor units that are in the same computer or in different computers. In other words, the process can be distributed between processor units **232** on the same or different computers in computer system **231.**

Further, the number of processor units **232** can be of the same type or different types of processor units. For example, the number of processor units **232** can be selected from at least one of a single core processor, a dual-core processor, a multi-processor core, a general-purpose central processing unit (CPU), a graphics processing unit (GPU), a digital signal processor (DSP), or some other type of processor unit.

In this illustrative example, controller system **230** is configured to select the number of electromagnetic properties **210** to reduce the interference from the other lidar systems. Further in this example, in selecting the number of electromagnetic properties **210,** controller system **230** changes a number of wavelengths **218** used by a number of lidar systems **206** to reduce the interference from the other lidar systems.

Controller system **230** can dynamically change a number of wavelengths **218** used by a number of lidar systems **206** to reduce the interference from the other lidar systems. In other words, controller system **230** can change the number of wavelengths **218** used by a number of lidar systems **206** during operation of those lidar systems in platforms **204** such as vehicles **205** in a mix of different types of platforms **204.** This type of change is in contrast to pre-selecting wavelengths **218** prior to the operation of vehicles **205.**

In this example, a number of wavelengths **218** may be changed only for some of lidar systems **206** to reduce the amount of interference. In these illustrative examples, the number of wavelengths **218** do not need to be changed such that every lidar system in lidar systems **206** uses a different wavelength in wavelengths **218.** The selection can be made to reduce interference. Further, the selection can also be made depending on the location or direction of travel for different vehicles **205.**

In another illustrative example, in selecting the number of electromagnetic properties **210,** controller system **230** changes polarity **219** of laser beams **208** used by a number of lidar systems **206** to reduce the interference from the other lidar systems. In this example, controller system **230** can dynamically change polarity **219** used by a number of lidar systems **206** to reduce the interference from the other lidar systems during operation of vehicles **205.** In other words, changing polarity **219** without changing wavelengths **218** may reduce interference between lidar systems **206.**

In changing polarity **219** of laser beams **208** used by a number of lidar systems **206,** polarity **219** can be changed for one or more of the laser beams **208.** For example, polarity **219** can be changed for one of laser beams **208** emitted by a lidar system in lidar systems **206.** In another illustrative example, polarity **219** can be changed for 6, 10, or some other number of lidar systems **206** emitted laser beams **208.**

In this illustrative example, the dynamic change to the number of electromagnetic properties **210** for laser beams **208** emitted by lidar systems **206** can be initiated a number of different ways. For example, the location of vehicles **205** within a region can be used to determine whether changes to the number of electromagnetic properties **210** is needed. For example, if the number of vehicles **205** having the same number of electromagnetic properties **210** are present within a region, controller system **230** can control lidar systems **206** to change electromagnetic properties **210** such that interference is reduced. The region can be an area around an airport. In another example, the region can be a city, a state, a select airspace, or other suitable area.

In another illustrative example, controller system **230** can perform a dynamic change to the number of electromagnetic properties **210** in response to detecting sensor data **214** that is erroneous sensor data. For example, if optical air data **215** in sensor data **214** indicates that a vehicle is traveling at a speed of Mach 2 on the ground, this speed can be considered erroneous. One or more electromagnetic properties **210** can be changed for the lidar system in that vehicle or lidar systems in other vehicles in the region to reduce interference causing erroneous readings from sensor data **214.**

In this example, the change in the number of electromagnetic properties **210** can be performed by controller system **230** sending instructions **213** to lidar systems **206.** These instructions can include at least one of changes for selected electromagnetic properties **210** or commands for data that can be used to change a number of electromagnetic properties **210** for one or more of lidar systems **206.**

In yet another illustrative example, controller system **230** can select the number of electromagnetic properties **210** by changing a number of wavelengths **218** used by a first number of lidar systems **206** to reduce the interference from the other lidar systems and changing polarity **219** of laser beams **208** used by a second number of the lidar systems **206** to reduce the interference from the other lidar systems. In these illustrative examples, the first number of lidar systems **206** and the second number of lidar systems **206** can be the same or different lidar systems in lidar systems **206.**

In another illustrative example, controller system **230** is configured to change orientation **243** of a laser beam in laser beams **208** emitted by a lidar system in lidar systems **206,** wherein interference caused by other laser beams emitted from other lidar systems in detecting backscatter light is reduced. In this example, the changed orientation reduces the interference caused by the laser beams emitted from the other lidar systems. For example, the laser beam can be adjusted to have an angle of 2 degrees, 4 degrees, or some other change from the initial orientation of the laser beam. This change in orientation **243** can be performed using a positioning system, optical elements, or other components in the lidar system.

In yet another illustrative example, one or more lidar systems **206** can be configured to determine when backscatter light **212** is greater than a threshold and filter backscatter light **212** to reduce the interference. In this example, backscatter light **212** can be greater than a threshold by measuring a parameter for the backscatter light and comparing that measured parameter to the threshold.

For example, maximum backscatter signal power (or reflected signal power) for backscatter light **212** can be determined as a function of the environment. This determination can be performed empirically, theoretically, or empirically and theoretically to determine the maximum backscatter signal power for backscatter light.

Further, a safety factor can be added to the threshold value. For example, for an aircraft flying on a clear day, the maximum backscatter signal power value may be X dBm. If a power higher than 10X dBm is detected by a lidar system, that maximum backscatter signal power value is blocked, discarded, or otherwise not used. In another example, for the aircraft flying through clouds, the maximum backscatter signal power value may be Y dBm. As a result, if the maximum backscatter signal power detected is greater than 10Y dBm, that maximum backscatter signal power value is blocked, discarded, or otherwise not used.

In yet another example, for a ground vehicle, the maximum reflected power for backscatter light generated in response to a laser beam being scattered by another car can be Z dBm. With this example, if maximum reflected power detected is greater than 10Z dBm, that maximum reflected power is blocked, discarded, or otherwise not need.

Thus, illustrative examples enable many platforms to operate lidar systems simultaneously without interfering with each other. This type of lidar system management can be used with platforms such as vehicles, and in particular with aircraft. Further, this type of management can also be used with different types of platforms such as buildings, aircraft, ground vehicles, and other suitable platforms.

In the different illustrative examples, platforms can be assigned or instructed to use a unique number of electromagnetic properties that reduces the occurrence of erroneous sensor data generated by lidar systems. In the illustrative examples, a lidar system transmits one or more laser beams and receives backscatter data using the number of electromagnetic properties assigned to that lidar system. As depicted, these electromagnetic properties can include wavelength, polarity, or both.

The illustration of lidar environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

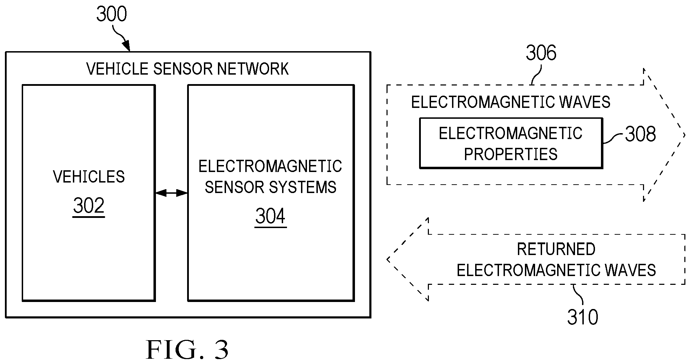

For example, in **Figure 3****,** an illustration of a block diagram of a vehicle sensor network is depicted in accordance with an illustrative embodiment. In this example, vehicle sensor network **300** is an example of another type of sensor network that can be used in addition to or in place of vehicle lidar network **211** in **Figure 2****.**

As depicted in this example, vehicle sensor network **300** comprises vehicles **302** and electromagnetic sensor systems **304.** In this example, electromagnetic sensor systems **304** are located in vehicles **302.** Each vehicle in vehicles **302** may have one or more of electromagnetic sensor systems **304.**

In this illustrative example, electromagnetic sensor systems **304** are configured to emit electromagnetic waves **306** having a number of electromagnetic properties **308.** Further in this example, electromagnetic waves **306** can take a number of different forms. For example, electromagnetic waves **306** can be selected from at least one of a laser beam, a radio wave, a microwave beam, an ultraviolet beam, or other types of electromagnetic waves **306.** In this example, a radio wave can be 10⁻⁶ Hz to 10⁻² Hz. The number of electromagnetic properties **308** is selected to reduce interference caused by electromagnetic waves emitted from other electromagnetic sensor systems in detecting returned electromagnetic waves **310.**

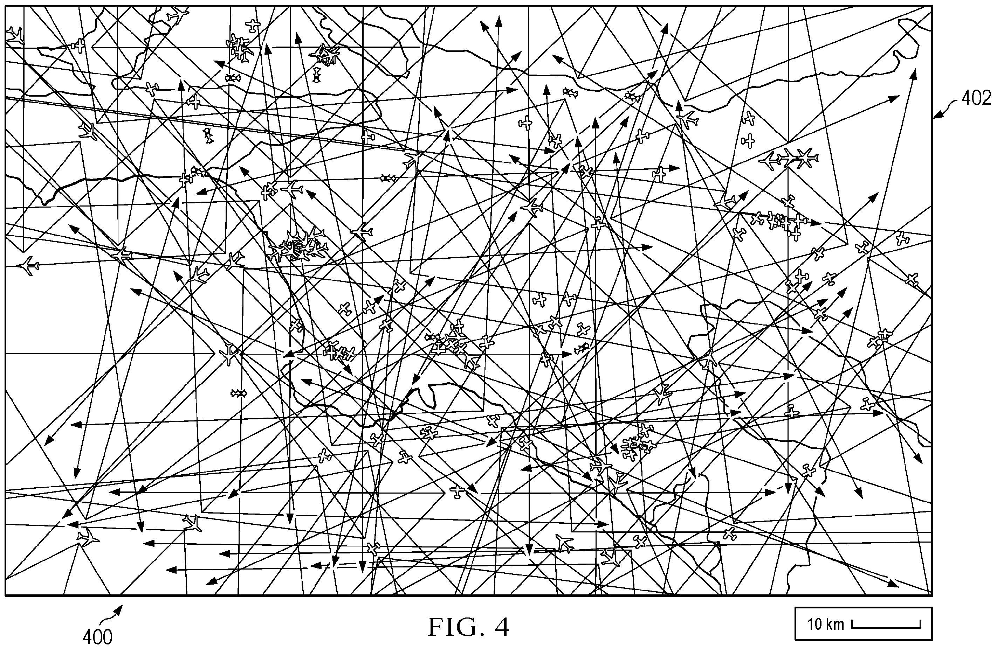

With reference next to **Figure 4****,** an illustration of aircraft with lidar systems is depicted in points with an illustrative embodiment. In this illustrative example, aircraft **400** are in region **402.** As depicted, each of aircraft **400** has a lidar system. As can be seen in this illustrative example, lidar systems emit laser beams during operation of aircraft **400.** The emission of these laser beams can result in interference when a laser beam having a wavelength is detected by a lidar system using the same wavelength.

In this illustrative example, the interference in region **402** between aircraft **400** is reduced by selecting electromagnetic properties laser beams emitted by the lidar systems used by aircraft **400.** In these illustrative examples, these electromagnetic properties can include at least one of a wavelength or a polarity.

In one illustrative example, these electromagnetic properties can be pre-configured in the lidar systems used by aircraft **400.** Further, in another illustrative example, these electromagnetic properties can be changed or adjusted dynamically during operation of aircraft **400.** As described in other examples, the change to the electromagnetic properties can be selected to decrease the probability of interference between lidar systems used by aircraft **400.**

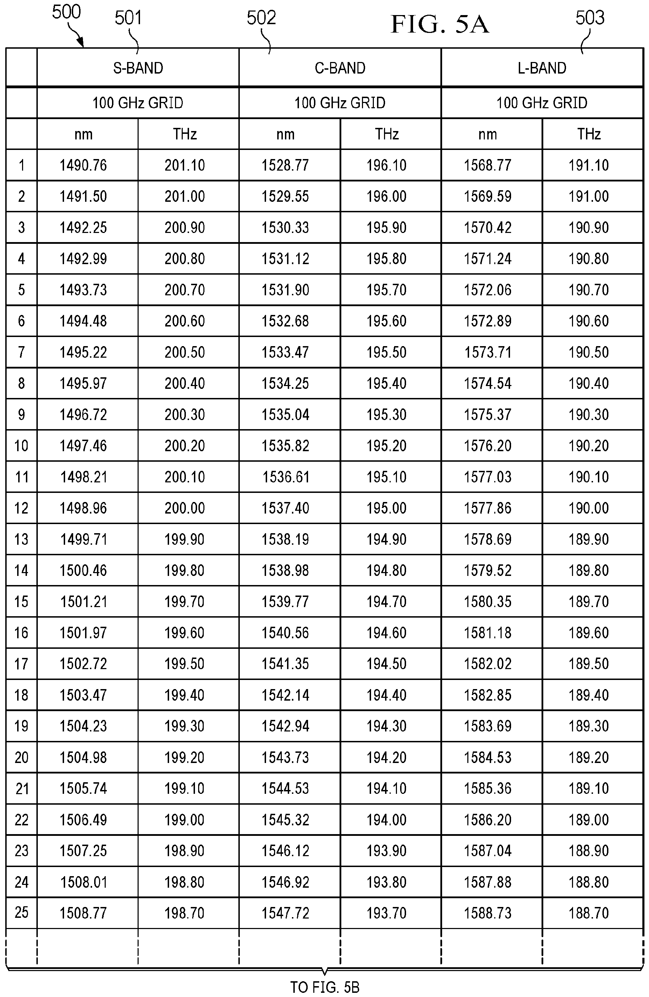

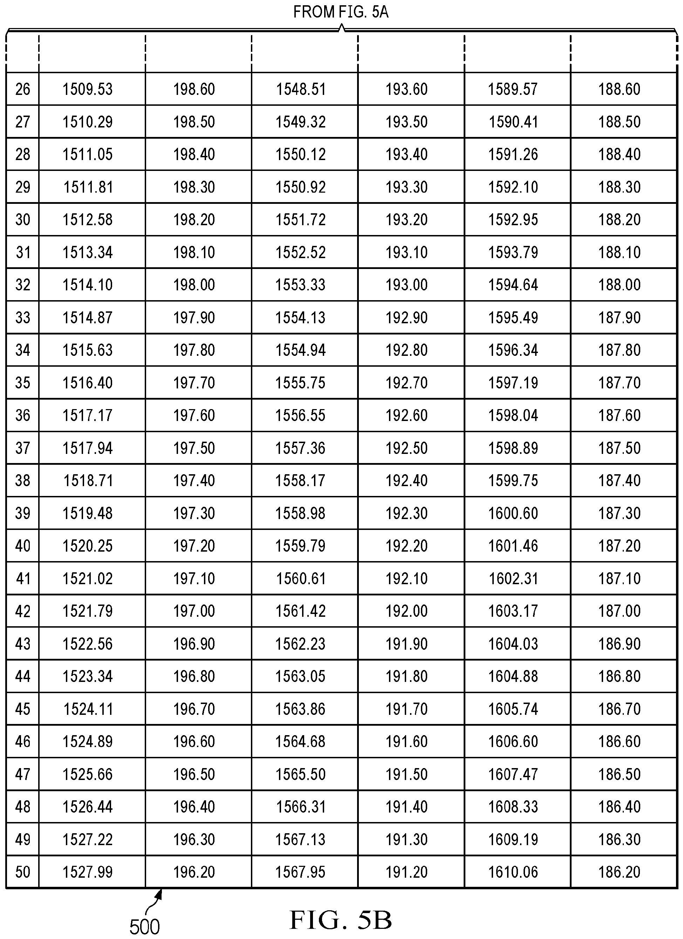

Turning next to **Figures 5A** and **5B****,** illustrations of channels for laser beam wavelength is depicted in accordance with an illustrative item. In this illustrative example, table **500** illustrates a portion of a dense wavelength division multiplexing (DWDM) ITU (International Telecommunication Union) grid specification. This table depicts a standardized system that divides the spectrum of light for use in fiber optic communications. In this example, table **500** has channels for S-Band **501,** C-Band **502,** and L-Band **503.**

In this example, channels identifying wavelengths and corresponding frequencies for light can be used to select wavelengths for lidar systems in lidar network **202** such as vehicle lidar network **211** in **Figure 2****.** In these illustrative examples, different channels can be configured in lidar systems that are manufactured for use in aircraft or other vehicles. For example, a bandpass filter for passing light that is used to generate sensor data can be selected for a particular channel.

Further, in some illustrative examples these channels can be selected during operation of the vehicles. In other words, the channels can be dynamically changed during operation of vehicles. With this example, the bandpass filter can be changed or adjusted to use different channels. Additionally, the laser source can also be adjusted to emit a laser beam for the desired channel.

These changes to lidar systems can be based on channels being used by different vehicles in a region. In other examples, the changes made based on channels used by aircraft in an aircraft fleet used by a particular airline. Further, the number of channels illustrated in this example can be increased by the selection of polarity for each channel. For example, a particular wavelength in the channel can be assigned twice with one assignment for polarity vertical to the ground and another assignment for a polarity horizontal to the ground.

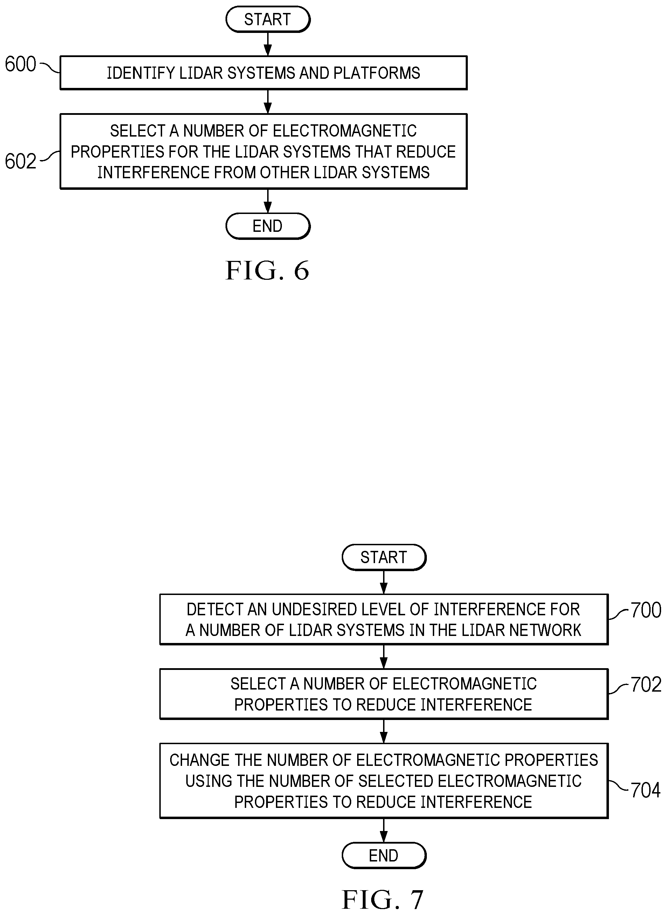

Turning next to **Figure 6****,** an illustration of a flowchart of a process for operating a lidar network is depicted in accordance with an illustrative embodiment. The process in **Figure 6** can be implemented in hardware, software, or both. When implemented in software, the process can take the form of program instructions that are run by one of more processor units located in one or more hardware devices in one or more computer systems. For example, the process can be implemented in lidar network **202** in **Figure 2****.**

The process identifies lidar systems and platforms (operation **600).** The process then selects a number of electromagnetic properties for the lidar systems that reduce interference from other lidar systems (operation **602).** The process terminates thereafter. In operation **602,** this process can be implemented by selecting lidar systems for use in platforms. In other illustrative examples, the process can dynamically change electromagnetic properties for the lidar systems during operation of the lidar systems.

With reference now to **Figure 7****,** an illustration of a flowchart of a process for operating a lidar network is depicted in accordance with an illustrative embodiment. The process in **Figure 7** can be implemented in hardware, software, or both. When implemented in software, the process can take the form of program instructions that are run by one or more processor units located in one or more hardware devices in one or more computer systems. For example, the process can be implemented in lidar network **202** in **Figure 2****.** In this example, this process can be implemented in controller system **230** in lidar network **202** in **Figure 2****.** This process can be initiated each time undesired interference is determined for one or more lidar systems.

The process begins by detecting an undesired level of interference for a number of lidar systems in the lidar network (operation **700).** In operation **700,** this interference can be caused by lidar systems in the lidar network or other lidar systems outside of the lidar network.

The process selects a number of electromagnetic properties to reduce interference (operation **702).** In this illustrative example, the controller system can identify changes selected from at least one of a wavelength or a polarity for one or more lidar systems in the lidar network.

The analysis can be based on the location of platforms having the lidar systems. Further, the analysis can also be based on actual interference detected for the lidar systems in the platforms.

These changes can be for the number of lidar systems determined to have an undesired level of interference. In other examples, these changes can be to other lidar systems other than, or in addition to, those lidar systems having an undesired level of interference.

The process changes the number of electromagnetic properties using the number of selected electromagnetic properties to reduce interference (operation **704).** The process terminates thereafter. In operation **704,** instructions can be sent to a number of the lidar systems selected to have changes to the number of electromagnetic properties.

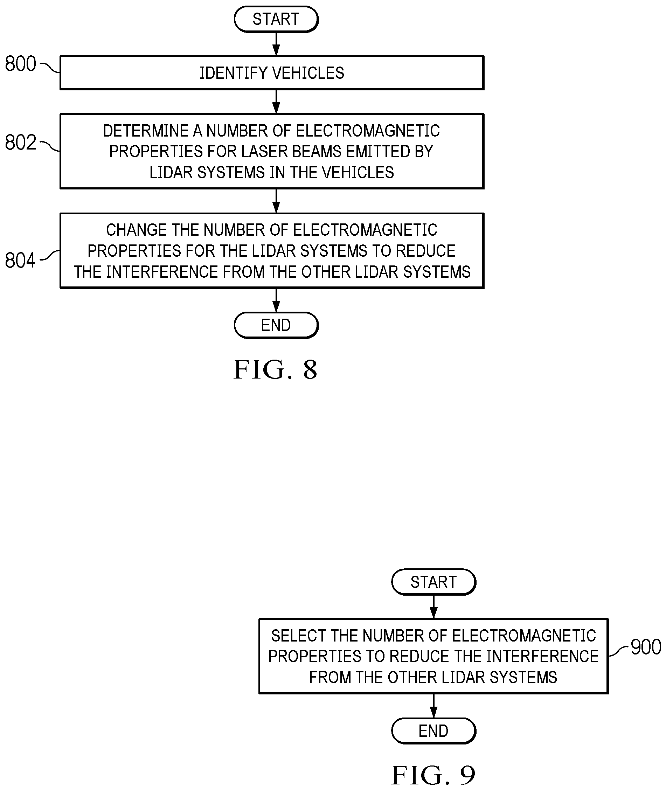

Turning now to **Figure 8****,** an illustration of a flowchart of a process for operating a vehicle lidar network is depicted in accordance with an illustrative embodiment. The process in **Figure 8** can be implemented in hardware, software, or both. When implemented in software, the process can take the form of program instructions that are run by one of more processor units located in one or more hardware devices in one or more computer systems. For example, the process can be implemented in controller system **230** in **Figure 2****.**

The process begins by identifying vehicles (operation **800).** In operation **800,** the vehicles can be identified in a number of different ways. For example, the vehicles can be vehicles in a fleet of vehicles. In another example, the vehicles can be those within a particular region. This region can be an area around an airport, a city, county, a state, an airspace, or other type of region. In these examples, a region can be one or more layered zones having boundaries.

The process determines a number of electromagnetic properties for laser beams emitted by lidar systems in the vehicles (operation **802).** The process changes the number of electromagnetic properties for the lidar systems to reduce the interference from the other lidar systems (operation **804).** The process terminates thereafter.

Turning next to **Figure 9****,** an illustration of a flowchart of a process for selecting electromagnetic properties is depicted in accordance with an illustrative embodiment. This process is an example of an operation that can be performed with the operations in **Figure 8****.**

The process selects the number of electromagnetic properties to reduce the interference from the other lidar systems (operation **900).** The process terminates thereafter.

The flowchart in this example shows selecting the number of electromagnetic properties as being a separate step from changing the number of electromagnetic properties in operation **804.** In other illustrative examples, this selecting operation can include performing the change of the electromagnetic properties identified.

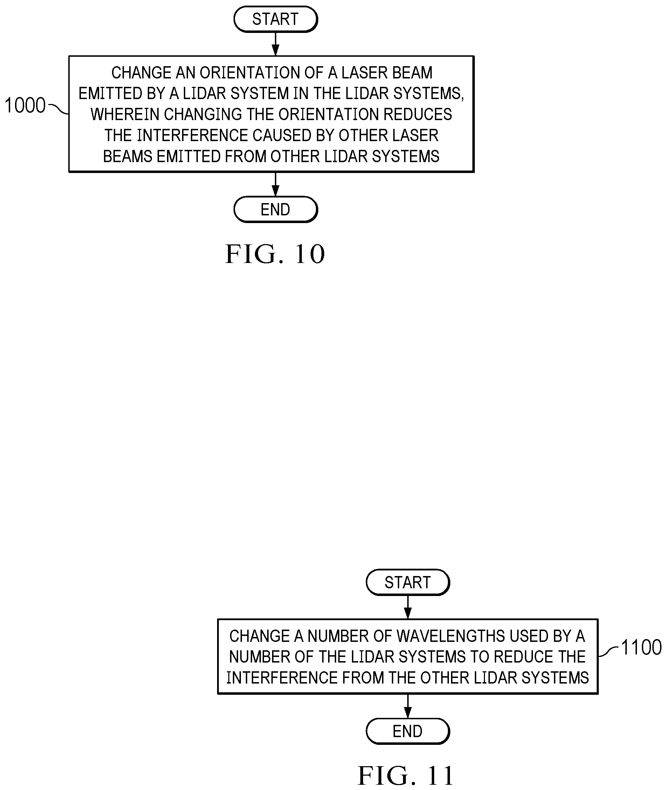

Next in **Figure 10****,** an illustration of a flowchart of process for changing a laser beam orientation is depicted in accordance with an illustrative embodiment. The process in this figure is an example of an operation that can be performed with the operations in **Figure 8****.**

The process changes an orientation of a laser beam emitted by a lidar system in the lidar systems, wherein changing the orientation reduces the interference caused by other laser beams emitted from other lidar systems (operation **1000).** The process terminates thereafter.

Turning now to **Figure 11****,** an illustration of a flowchart of a process for changing a number of electromagnetic properties is depicted in accordance with an illustrative embodiment. This process is an example of an implementation for operation **804** in **Figure 8****.**

The process changes a number of wavelengths used by a number of the lidar systems to reduce the interference from the other lidar systems (operation **1100).** The process terminates thereafter.

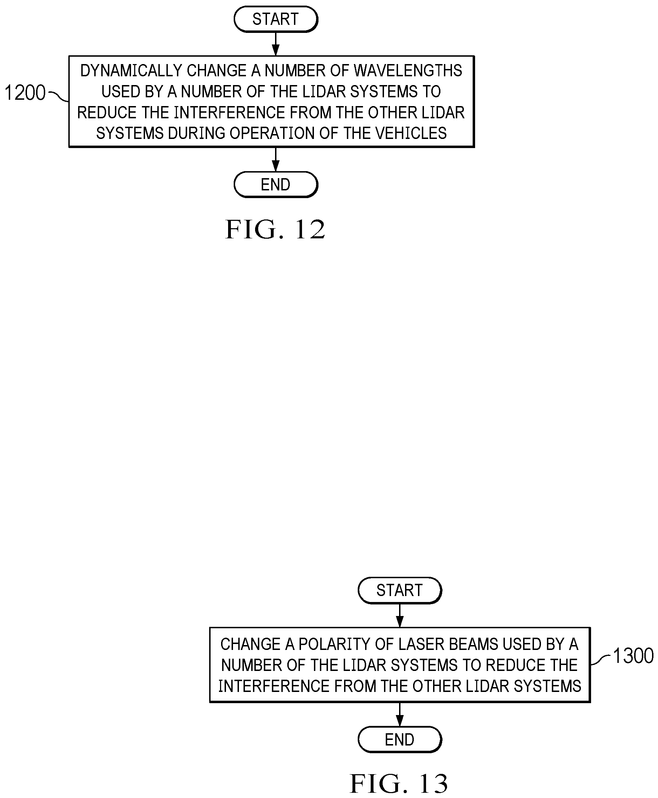

Turning now to **Figure 12****,** an illustration of a flowchart of a process for changing a number of electromagnetic properties is depicted in accordance with an illustrative embodiment. This process is an example of an implementation for operation **804** in **Figure 8****.**

The process dynamically changes a number of wavelengths used by a number of the lidar systems to reduce the interference from the other lidar systems during operation of the vehicles (operation **1200).** The process terminates thereafter.

With reference to **Figure 13****,** an illustration of a flowchart of a process for changing a number of electromagnetic properties is depicted in accordance with an illustrative embodiment. This process is another example of an implementation for operation **804** in **Figure 8****.**

The process changes a polarity of laser beams used by a number of the lidar systems to reduce the interference from the other lidar systems (operation **1300).** The process terminates thereafter.

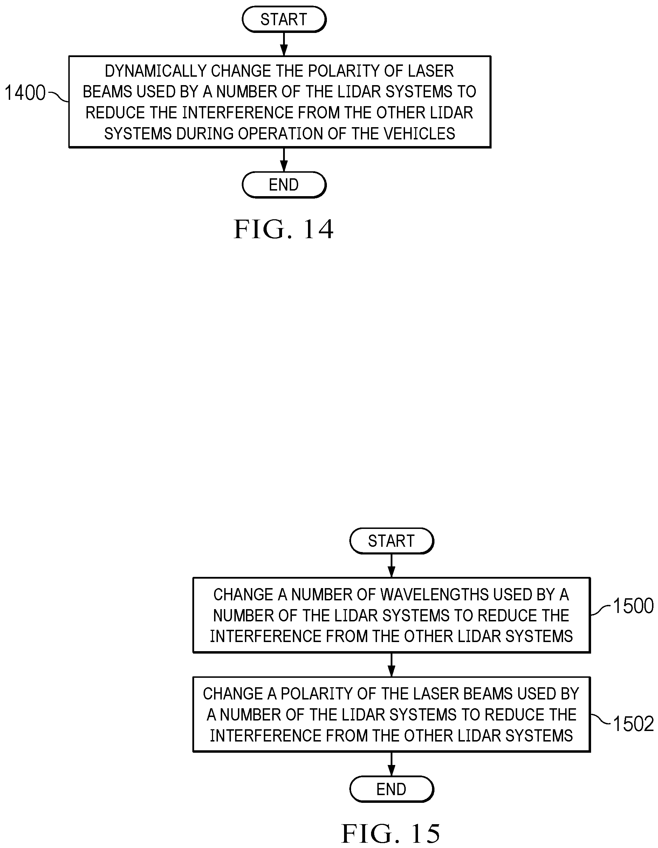

Next in **Figure 14****,** an illustration of a flowchart of a process for changing a number of electromagnetic properties is depicted in accordance with an illustrative embodiment. This process is yet another example of an implementation for operation **804** in **Figure 8****.**

The process dynamically changes the polarity of laser beams used by a number of the lidar systems to reduce the interference from the other lidar systems during operation of the vehicles (operation **1400).** The process terminates thereafter.

Turning now to **Figure 15****,** an illustration of a flowchart of a process for changing a number of electromagnetic properties is depicted in accordance with an illustrative embodiment. This process is yet another example of an implementation for operation **804** in **Figure 8****.**

The process changes a number of wavelengths used by a number of the lidar systems to reduce the interference from the other lidar systems (operation **1500).** The process changes a polarity of the laser beams used by a number of the lidar systems to reduce the interference from the other lidar systems (operation **1502).** The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

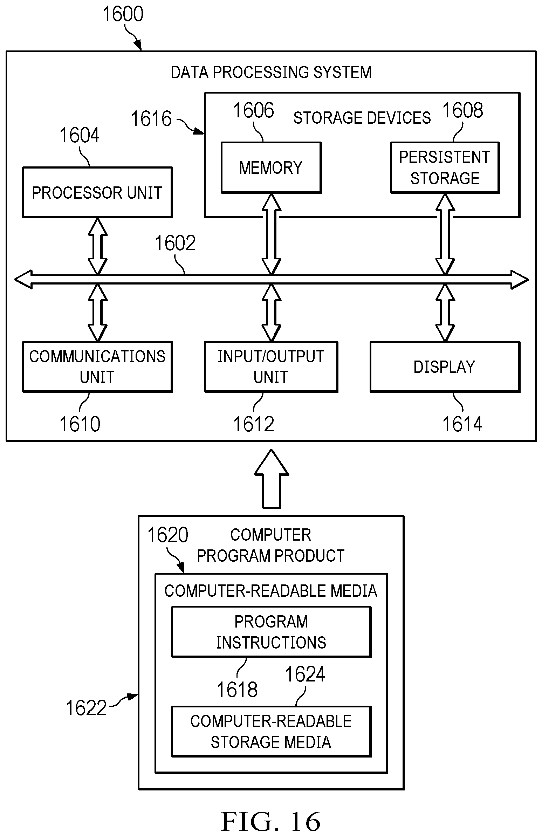

Turning now to **Figure 16****,** an illustration of a block diagram of a data processing system is depicted in accordance with an illustrative embodiment. Data processing system **1600** can be used to implement computer system **231** in **Figure 2****.** These data processing systems can also be used to computing components in flying car **101,** flying car **102,** flying car **103** in **Figure 1****.** Further, data processing system **1600** can be used to implement computing for data processing components or devices in platforms **204** in **Figure 2****.**

In this illustrative example, data processing system **1600** includes communications framework **1602,** which provides communications between processor unit **1604,** memory **1606,** persistent storage **1608,** communications unit **1610,** input/output (I/O) unit **1612,** and display **1614.** In this example, communications framework **1602** takes the form of a bus system.

Processor unit **1604** serves to execute instructions for software that can be loaded into memory **1606.** Processor unit **1604** includes one or more processors. For example, processor unit **1604** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1604** can be implemented using one or more heterogeneous processor systems in which a main processor is present with secondary processors on a single chip. As another illustrative example, processor unit **1604** can be a symmetric multi-processor system containing multiple processors of the same type on a single chip.

Memory **1606** and persistent storage **1608** are examples of storage devices **1616.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1616** may also be referred to as computer-readable storage devices in these illustrative examples. Memory **1606,** in these examples, can be, for example, a random-access memory or any other suitable volatile or non-volatile storage device. Persistent storage **1608** may take various forms, depending on the particular implementation.

For example, persistent storage **1608** may contain one or more components or devices. For example, persistent storage **1608** can be a hard drive, a solid-state drive (SSD), a flash memory, a rewritable optical disk, a rewritable magnetic tape, or some combination of the above. The media used by persistent storage **1608** also can be removable. For example, a removable hard drive can be used for persistent storage **1608.**

Communications unit **1610,** in these illustrative examples, provides for communications with other data processing systems or devices. In these illustrative examples, communications unit **1610** is a network interface card.

Input/output unit **1612** allows for input and output of data with other devices that can be connected to data processing system **1600.** For example, input/output unit **1612** may provide a connection for user input through at least one of a keyboard, a mouse, or some other suitable input device. Further, input/output unit **1612** may send output to a printer. Display **1614** provides a mechanism to display information to a user.

Instructions for at least one of the operating system, applications, or programs can be located in storage devices **1616,** which are in communication with processor unit **1604** through communications framework **1602.** The processes of the different embodiments can be performed by processor unit **1604** using computer-implemented instructions, which may be located in a memory, such as memory **1606.**

These instructions are referred to as program instructions, computer-usable program instructions, or computer-readable program instructions that can be read and executed by a processor in processor unit **1604.** The program instructions in the different embodiments can be embodied on different physical or computer-readable storage media, such as memory **1606** or persistent storage **1608.**

Program instructions **1618** are located in a functional form on computer-readable media **1620** that is selectively removable and can be loaded onto or transferred to data processing system **1600** for execution by processor unit **1604.** Program instructions **1618** and computer-readable media **1620** form computer program product **1622** in these illustrative examples. In the illustrative example, computer-readable media **1620** is computer-readable storage media **1624.**

Computer-readable storage media **1624** is a physical or tangible storage device used to store program instructions **1618** rather than a medium that propagates or transmits program instructions **1618.** Computer-readable storage media **1624** may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SRAM), a compact disc read-only memory (CD-ROM), a digital versatile disk (DVD), a memory stick, a floppy disk, a mechanically encoded device, such as punch cards or pits / lands formed in a major surface of a disc, or any suitable combination thereof.

Computer-readable storage media **1624,** as that term is used in the present disclosure, is not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media.

Further, data can be moved at some occasional points in time during normal operations of a storage device. These normal operations include access, de-fragmentation, or garbage collection. However, these operations do not render the storage device as transitory because the data is not transitory while the data is stored in the storage device.

Alternatively, program instructions **1618** can be transferred to data processing system **1600** using a computer-readable signal media. The computer-readable signal media are signals and can be, for example, a propagated data signal containing program instructions **1618.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media **1620"** can be singular or plural. For example, program instructions **1618** can be located in computer-readable media **1620** in the form of a single storage device or system. In another example, program instructions **1618** can be located in computer-readable media **1620** that is distributed in multiple data processing systems. In other words, some instructions in program instructions **1618** can be located in one data processing system while other instructions in program instructions **1618** can be located in one data processing system. For example, a portion of program instructions **1618** can be located in computer-readable media **1620** in a server computer while another portion of program instructions **1618** can be located in computer-readable media **1620** located in a set of client computers.

The different components illustrated for data processing system **1600** are not meant to provide architectural limitations to the manner in which different embodiments can be implemented. In some illustrative examples, one or more of the components may be incorporated in or otherwise form a portion of, another component. For example, memory **1606,** or portions thereof, may be incorporated in processor unit **1604** in some illustrative examples. The different illustrative embodiments can be implemented in a data processing system including components in addition to or in place of those illustrated for data processing system **1600.** Other components shown in **Figure 16** can be varied from the illustrative examples shown. The different embodiments can be implemented using any hardware device or system capable of running program instructions **1618.**

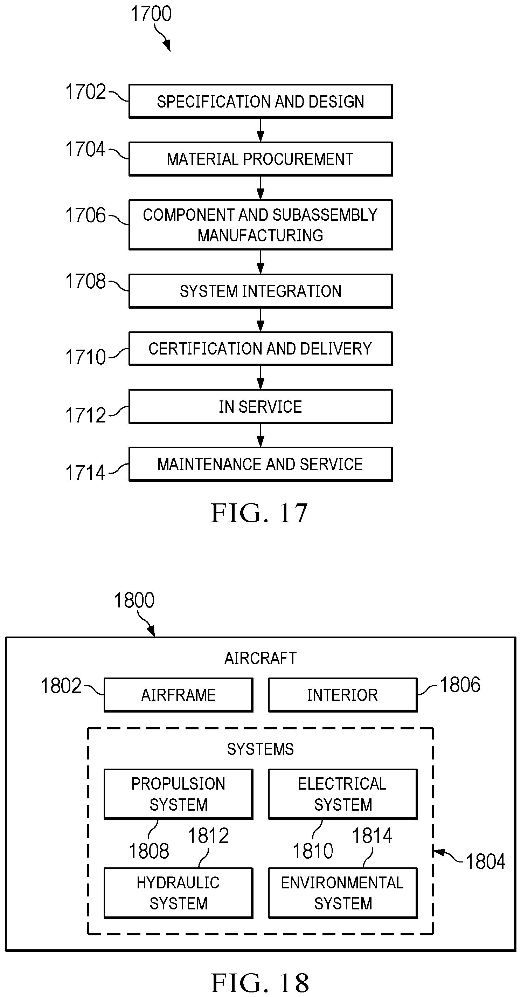

Illustrative embodiments of the disclosure may be described in the context of aircraft manufacturing and service method **1700** as shown in **Figure 17** and aircraft **1800** as shown in **Figure 18****.** Turning first to **Figure 17****,** an illustration of a block diagram of an aircraft manufacturing and service method is depicted in accordance with an illustrative embodiment. During pre-production, aircraft manufacturing and service method **1700** may include specification and design **1702** of aircraft **1800** in **Figure 18** and material procurement **1704.**

During production, component and subassembly manufacturing **1706** and system integration **1708** of aircraft **1800** in **Figure 18** takes place. Thereafter, aircraft **1800** in **Figure 18** can go through certification and delivery **1710** in order to be placed in service **1712.** While in service **1712** by a customer, aircraft **1800** in **Figure 18** is scheduled for routine maintenance and service **1714,** which may include modification, reconfiguration, refurbishment, and other maintenance or service.

Each of the processes of aircraft manufacturing and service method **1700** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 18****,** an illustration of a block diagram of an aircraft is depicted in which an illustrative embodiment may be implemented. In this example, aircraft **1800** is produced by aircraft manufacturing and service method **1700** in **Figure 17** and may include airframe **1802** with plurality of systems **1804** and interior **1806.** Examples of systems **1804** include one or more of propulsion system **1808,** electrical system **1810,** hydraulic system **1812,** and environmental system **1814.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1700** in **Figure 17****.**

In one illustrative example, components or subassemblies produced in component and subassembly manufacturing **1706** in **Figure 17** can be fabricated or manufactured in a manner similar to components or subassemblies produced while aircraft **1800** is in service **1712** in **Figure 17****.** As yet another example, one or more apparatus embodiments, method embodiments, or a combination thereof can be utilized during production stages, such as component and subassembly manufacturing **1706** and system integration **1708** in **Figure 17****.** One or more apparatus embodiments, method embodiments, or a combination thereof may be utilized while aircraft **1800** is in service **1712,** during maintenance and service **1714** in **Figure 17****,** or both. The use of a number of the different illustrative embodiments may substantially expedite the assembly of aircraft **1800,** reduce the cost of aircraft **1800,** or both expedite the assembly of aircraft **1800** and reduce the cost of aircraft **1800.**

For example, lidar systems can be designed, manufactured and implemented during at least one of specification and design **1702,** component and subassembly manufacturing **1706,** or system integration **1708** for aircraft **1800.** Further, lidar systems in the different illustrative examples can be implemented during maintenance and service **1714.** This maintenance and service can include modification, reconfiguration, refurbishment, and other maintenance or service. Further, lidar systems can be operated and managed to reduce interference during the operation of aircraft **1800** during in service **1712.**

Thus, the illustrative embodiments provide a method, apparatus, system, and computer program product for reducing interference between lidar systems used in platforms. In one example, s vehicle lidar network comprises a vehicle and lidar systems in the vehicle. The lidar systems are configured to emit laser beams having a number of electromagnetic properties in which the number of electromagnetic properties is selected to reduce interference caused by other laser beams emitted from other lidar systems in detecting backscatter light.

Consequently, many platforms can operate lidar systems simultaneously without interfering with each other. This type of lidar system management can be used with platforms such as vehicles and in particular with aircraft.

In the different illustrative examples, platforms can be assigned a unique number of electromagnetic properties that reduces the occurrence of erroneous sensor data generated by lidar systems. In the illustrative examples, a lidar system transmits one or more laser beams and receives backscatter data using the number of electromagnetic properties assigned to that lidar system. As depicted, these electromagnetic properties can include wavelength, polarity, or both.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes," "including," "has," "contains," and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A vehicle lidar network (211) comprising:
vehicles (205, 302); and
lidar systems (206) in the vehicles (205, 302), wherein the lidar systems (206) are configured to emit laser beams (208) having a number of electromagnetic properties (210) in which the number of electromagnetic properties (210) is selected to reduce interference caused by other laser beams emitted from other lidar systems, wherein the number of electromagnetic properties (210) are selected from at least one of a wavelength of the laser beams or a polarity of the laser beams.

2. The vehicle lidar network (211) of claim 1 further comprising:
a controller system (230) configured to select the number of electromagnetic properties (210) to reduce the interference from the other lidar systems.

3. The vehicle lidar network (211) of claim 1 or 2 further comprising:
a controller system (230) configured to change an orientation (243) of a laser beam emitted by a lidar system in the lidar systems (206), wherein the changed orientation reduces the interference caused by the other laser beams emitted from the other lidar systems.

4. The vehicle lidar network (211) of any preceding claim, wherein in selecting the number of electromagnetic properties (210), the controller system (230) is configured to:
change a number of wavelengths (218) used by a number of the lidar systems (206) to reduce the interference from the other lidar systems, and/or change a polarity (219) of the laser beams (208) used by a number of the lidar systems (206) to reduce the interference from the other lidar systems.

5. The vehicle lidar network (211) of claim 4, wherein the change to the number of wavelengths and/or polarity is performed dynamically.

6. The vehicle lidar network (211) of any preceding claim, wherein in selecting the number of electromagnetic properties (210), the controller system (230) is configured to:
change a number of wavelengths (218) used by a first number of the lidar systems (206) to reduce the interference from the other lidar systems; and
change a polarity (219) of the laser beams (208) used by a second number of the lidar systems (206) to reduce the interference from the other lidar systems.

7. The vehicle lidar network (211) of claim 2, wherein the controller system (230) is selected from one of a distributed controller system located in the vehicles (205, 302) or a centralized controller system in a location.

8. The vehicle lidar network (211) of any preceding claim, wherein:
the lidar systems (206) in the vehicles (205, 302) generate sensor data (214) using backscatter light (212);
the sensor data (214) is processed by a processor system located in a portion of the vehicles (205, 302) or in a remote location; and
the vehicles (205, 302) execute instructions (241) received from the processor system.

9. The vehicle lidar network (211) of claim 8, wherein the lidar systems (206) are configured to:
determine when the backscatter light (212) is greater than a threshold; and
filter the backscatter light (212).

10. A method of operating a vehicle lidar network (211), the method comprising:
identifying (800) vehicles (205, 302); and
determining (802) a number of electromagnetic properties (210) of laser beams (208) emitted by lidar systems (206) in the vehicles (205, 302); and
changing (804) the number of electromagnetic properties (210) for the lidar systems (206) to reduce interference from other lidar systems, wherein the number of electromagnetic properties (210) is selected from at least one of a wavelength of the laser beams or a polarity of the laser beams.

11. The method of claim 10 further comprising:
selecting (900) the number of electromagnetic properties (210) to reduce the interference from the other lidar systems.

12. The method of claim 10 or 11, further comprising:
changing (1000) an orientation (243) of a laser beam emitted by a lidar system in the lidar systems (206), wherein said changing the orientation reduces interference caused by other laser beams emitted from other lidar systems.

13. The method of any of claims 10 to 12 , wherein the change to the number of wavelengths, orientation and/or polarity is performed dynamically.

14. The method of any of claims 10 to 13, wherein:
the lidar systems (206) in the vehicles (205, 302) generate sensor data (214) using backscatter light (212);
the sensor data (214) is processed by a processor system located in a portion of the vehicles (205, 302) or in a remote location; and
the vehicles (205, 302) execute instructions (241) received from the processor system.

15. The method of claim 14, further comprising determining when the backscatter light (212) is greater than a threshold; and
filtering the backscatter light (212).
